(19) Europäisches Patentamt
European Patent Office
Office européen des brevets

(11) **EP 4 654 157 A1**

(12) **EUROPEAN PATENT APPLICATION**
published in accordance with Art. 153(4) EPC

(43) Date of publication:
**26.11.2025 Bulletin 2025/48**

(21) Application number: **24777890.5**

(22) Date of filing: **22.03.2024**

(51) International Patent Classification (IPC):
**G06V 20/56** (2022.01)

(52) Cooperative Patent Classification (CPC):
**G06N 3/0464; G06N 3/048; G06V 10/44;
G06V 10/82; G06V 20/56; G06V 20/58**

(86) International application number:
**PCT/CN2024/083182**

(87) International publication number:
**WO 2024/199101 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 CN 202310328836**

(71) Applicant: **Huawei Technologies Co., Ltd.
Shenzhen, Guangdong 518129 (CN)**

(72) Inventors:
• **DONG, Zhiwei
Shenzhen, Guangdong 518129 (CN)**

• **CAO, Xiya
Shenzhen, Guangdong 518129 (CN)**
• **ZHU, Xi
Shenzhen, Guangdong 518129 (CN)**
• **LIU, Qiangbo
Shenzhen, Guangdong 518129 (CN)**
• **LI, Wei
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **LANE LINE DETECTION METHOD AND APPARATUS, AND ELECTRONIC DEVICE**

(57) A lane line detection method includes: acquiring an image of a road in front of a vehicle; processing a feature map of the image by using N convolution kernels, to obtain N attention maps, where one of the attention maps is used to represent a weight of one instance in the image at a location of a sample in the feature map of the image; calculating, based on the feature map of the image and the attention map, a representation vector of the instance corresponding to the attention map; calculating a class and a location of the instance based on the representation vector of the instance; and displaying, when the class of the instance is a lane line, the lane line on the image based on the location of the lane line. In this way, instances in the feature map are distinguished at a channel level, and detection is performed by using representation vectors of the instances, so that dependence on high-resolution feature calculation and complex post-processing is eliminated in principle, improving real-time performance of an algorithm, and ensuring precision of detection. In addition, no assumption is made on a lane line, so that a lane line of any shape can be detected, resulting in high generalizability.

FIG. 12

EP 4 654 157 A1

# Description

This application claims priority to Chinese Patent Application No. 202310328836.3, filed with the China National Intellectual Property Administration on March 29, 2023 and entitled "LANE LINE DETECTION METHOD AND APPARATUS, AND ELECTRONIC DEVICE", which is incorporated herein by reference in its entirety.

## TECHNICAL FIELD

This application relates to the field of artificial intelligence (artificial intelligence, AI) technologies, and in particular, to a lane line detection method and apparatus, and an electronic device.

## BACKGROUND

Currently, map navigation, autonomous driving, and other technologies have gradually become integrated into people's daily life, and gradually serve as auxiliary tools for people's daily travel. In the map navigation, autonomous driving, and other technologies, lane line information on pavements can provide route reference for users, vehicles, or the like, to prevent the vehicles from deviating from driving routes, thereby avoiding accidents. Therefore, how to improve real-time performance, accuracy, and generalizability of lane line detection is a technical problem that needs to be urgently resolved currently.

## SUMMARY

This application provides a lane line detection method and apparatus, an electronic device, a computer storage medium, and a computer product, which can improve real-time performance, accuracy, and generalizability of lane line detection.

According to a first aspect, this application provides a lane line detection method, including: acquiring a first image of a road in front of a vehicle; processing a feature map of the first image by using a first quantity of convolution kernels, to obtain a first quantity of attention maps, where one of the attention maps is used to represent a weight of one instance in the first image at a location of a sample in the feature map of the first image; calculating, based on the feature map of the first image and the attention map, a representation vector of the instance corresponding to the attention map; calculating, based on the representation vector of the instance corresponding to the attention map, a class and a location of the instance corresponding to the attention map; and displaying, when the class of the instance corresponding to the attention map is a lane line, the lane line on the first image based on the location of the lane line.

In this way, during lane line detection, attention maps of some instances included in a feature map of a to-be-detected image (that is, the first image) are distinguished at a channel level, a representation vector of each instance is then calculated by using an attention map of each instance and the feature map of the to-be-detected image, and lane line detection is performed by using the representation vector of each instance, so that dependence on high-resolution feature calculation and complex post-processing is eliminated in principle, improving real-time performance of an algorithm, and ensuring high precision of lane line detection. In addition, during the detection, no simplified assumption is made on a lane line, so that a lane line of any shape can be detected, resulting in high generalizability.

For example, the attention map may be used to identify a location of a sample that requires attention in a subsequent task. The representation vector of the instance may be a feature of the instance. The location of the instance may be the location of the instance in the first image.

In a possible implementation, the method may further include: displaying, when the class of the instance corresponding to the attention map is a pavement marker, the pavement marker on the first image based on the location of the pavement marker. In this way, when the lane line is detected, the pavement marker can be detected, implementing joint detection of the lane line and the pavement marker. For example, the pavement marker may include one or more of a guide arrow, a road traffic marking, a road traffic sign, a crosswalk line, a diversion line, a rod-shaped object on a road, and the like.

In a possible implementation, a maximum value of a quantity of instances displayed on the first image is the first quantity. Because a quantity of convolution kernels is predetermined, a quantity of instances distinguished at a channel level is also determined. Therefore, a maximum value of a quantity of finally recognized instances is also determined.

In a possible implementation, calculating, based on the feature map of the first image and the attention map, the representation vector of the instance corresponding to the attention map specifically includes: obtaining, based on the feature map of the first image and the attention map, a feature map of the instance corresponding to the attention map; and obtaining, based on the feature map of the instance corresponding to the attention map, the representation vector of the instance corresponding to the attention map. In this way, the representation vector of the instance can be calculated, thereby facilitating subsequent recognition of the class and the location of the instance.

In a possible implementation, calculating, based on the representation vector of the instance corresponding to the attention map, the class and the location of the instance corresponding to the attention map specifically includes: processing, through a classification network, the representation vector of the instance corresponding to the attention map, to obtain the class of the instance corresponding to the attention map; calculating the weight of the instance corresponding to the attention map at the location of the sample in the feature map of the first image based on the feature map of the first image and the representation vector of the instance corresponding to the attention map, to obtain a heat map of the instance corresponding to the attention map, where the heat map is used to represent the weight of the instance corresponding to the attention map at the location of the sample in the feature map of the first image; and mapping, to the first image, a location of a sample corresponding to a weight greater than a preset value in the heat map, to obtain the location of the instance corresponding to the attention map. In this way, classification and location recognition of the instance can be implemented, thereby facilitating subsequent recognition of whether the instance is a lane line, and facilitating display of the lane line based on the location of the lane line when the instance is the lane line.

Further, the method includes: calculating an offset of the instance corresponding to the attention map at the location of the sample in the feature map of the first image based on the feature map of the first image and the representation vector of the instance corresponding to the attention map, to obtain an offset map of the instance corresponding to the attention map, where the offset map is used to represent a deviation between a real location of the instance corresponding to the attention map on the first image and the location at which the instance corresponding to the attention map is mapped to the first image.

In this case, mapping, to the first image, the location of the sample corresponding to the weight greater than the preset value in the heat map, to obtain the location of the instance corresponding to the attention map specifically includes: correcting, based on the offset map of the instance corresponding to the attention map, the location of the sample corresponding to the weight greater than the preset value in the heat map, and mapping a corrected location to the first image, to obtain the location of the instance corresponding to the attention map. In this way, the location of the instance indicated by the heat map can be corrected by using the offset map, improving accuracy of detection.

In a possible implementation, the method may be performed by a terminal device such as a vehicle, an on-board terminal, or a mobile phone. In this case, the method may further include: obtaining, based on computing power of the terminal device, a quantity of iterations required for calculating the class and the location of the instance corresponding to the attention map; and calculating, based on the quantity of iterations, the class and the location of the instance corresponding to the attention map, where when the quantity of iterations is greater than or equal to 1, input data of each iteration is the feature map of the first image and a heat map that is of the instance corresponding to the attention map and that is obtained through previous calculation, and output data of each iteration includes a heat map of the instance corresponding to the attention map. In this way, when the computing power of the terminal device is high, a plurality of iterations can be performed to improve accuracy of detection.

In a possible implementation, in the method, the attention map, the representation vector, and the class and the location of the instance corresponding to the attention map are all obtained through calculation by using a neural network model. In this case, the method may further include: processing a second image by using the neural network model, to obtain a class and a location of an instance in the second image, where the second image is obtained based on transformation of the first image; obtaining a first loss based on the class and the location of the instance corresponding to the attention map and the class and the location of the instance in the second image; and updating a parameter in the neural network model with a target of minimizing the first loss. In this way, the neural network model can be updated, improving generalizability of the neural network model.

According to a second aspect, this application provides a lane line detection apparatus, including an acquisition module and a processing module. The acquisition module is configured to acquire a first image of a road in front of a vehicle. The processing module is configured to process a feature map of the first image by using a first quantity of convolution kernels, to obtain a first quantity of attention maps, where one of the attention maps is used to represent a weight of one instance in the first image at a location of a sample in the feature map of the first image. The processing module is further configured to calculate, based on the feature map of the first image and the attention map, a representation vector of the instance corresponding to the attention map. The processing module is further configured to calculate, based on the representation vector of the instance corresponding to the attention map, a class and a location of the instance corresponding to the attention map. The processing module is further configured to display, when the class of the instance corresponding to the attention map is a lane line, the lane line on the first image based on the location of the lane line.

In a possible implementation, the processing module is further configured to: display, when the class of the instance corresponding to the attention map is a pavement marker, the pavement marker on the first image based on the location of the pavement marker.

In a possible implementation, a maximum value of a quantity of instances displayed on the first image is the first quantity.

In a possible implementation, when calculating, based on the feature map of the first image and the attention map, the representation vector of the instance corresponding to the attention map, the processing module is specifically configured to: obtain, based on the feature map of the first image and the attention map, a feature map of the instance corresponding to the attention map; and obtain, based on the feature map of the instance corresponding to the attention map, the representation vector of the instance corresponding to the attention map.

In a possible implementation, when calculating, based on the representation vector of the instance corresponding to the attention map, the class and the location of the instance corresponding to the attention map, the processing module is specifically configured to: process, through a classification network, the representation vector of the instance corresponding to the attention map, to obtain the class of the instance corresponding to the attention map; calculate the weight of the instance corresponding to the attention map at the location of the sample in the feature map of the first image based on the feature map of the first image and the representation vector of the instance corresponding to the attention map, to obtain a heat map of the instance corresponding to the attention map, where the heat map is used to represent the weight of the instance corresponding to the attention map at the location of the sample in the feature map of the first image; and map, to the first image, a location of a sample corresponding to a weight greater than a preset value in the heat map, to obtain the location of the instance corresponding to the attention map.

In a possible implementation, the processing module is further configured to: calculate an offset of the instance corresponding to the attention map at the location of the sample in the feature map of the first image based on the feature map of the first image and the representation vector of the instance corresponding to the attention map, to obtain an offset map of the instance corresponding to the attention map, where the offset map is used to represent a deviation between a real location of the instance corresponding to the attention map on the first image and the location at which the instance corresponding to the attention map is mapped to the first image.

In this case, when mapping, to the first image, the location of the sample corresponding to the weight greater than the preset value in the heat map, to obtain the location of the instance corresponding to the attention map, the processing module is specifically configured to: correct, based on the offset map of the instance corresponding to the attention map, the location of the sample corresponding to the weight greater than the preset value in the heat map, and map a corrected location to the first image, to obtain the location of the instance corresponding to the attention map.

In a possible implementation, the lane line detection apparatus is deployed on a terminal device, and the processing module is further configured to: obtain, based on computing power of the terminal device, a quantity of iterations required for calculating the class and the location of the instance corresponding to the attention map; and calculate, based on the quantity of iterations, the class and the location of the instance corresponding to the attention map, where when the quantity of iterations is greater than or equal to 1, input data of each iteration is the feature map of the first image and a heat map that is of the instance corresponding to the attention map and that is obtained through previous calculation, and output data of each iteration includes a heat map of the instance corresponding to the attention map.

In a possible implementation, the attention map, the representation vector, and the class and the location of the instance corresponding to the attention map are all obtained through calculation by using a neural network model. In this case, the processing module is further configured to: process a second image by using the neural network model, to obtain a class and a location of an instance in the second image, where the second image is obtained based on transformation of the first image; obtain a first loss based on the class and the location of the instance corresponding to the attention map and the class and the location of the instance in the second image; and update a parameter in the neural network model with a target of minimizing the first loss.

According to a third aspect, this application provides an electronic device, including: at least one memory, configured to store a program; and at least one processor, configured to execute the program stored in the memory. When the program stored in the memory is executed, the processor is configured to perform the method described in the first aspect or any one of the possible implementations of the first aspect.

According to a fourth aspect, this application provides a computer-readable storage medium, where the computer-readable storage medium stores a computer program. When the computer program is run on a processor, the processor is enabled to perform the method described in the first aspect or any one of the possible implementations of the first aspect.

According to a fifth aspect, this application provides a computer program product. When the computer program product runs on a processor, the processor is enabled to perform the method described in the first aspect or any one of the possible implementations of the first aspect.

It may be understood that, for beneficial effects of the second aspect to the fifth aspect, refer to related descriptions in the first aspect. Details are not described herein again.

**BRIEF DESCRIPTION OF DRAWINGS**

The following briefly describes accompanying drawings that need to be used in descriptions of embodiments or the prior art.

FIG. 1 is a diagram of an architecture of a lane line detection system according to an embodiment of this application;
FIG. 2A and FIG. 2B are a diagram of a structure of some modules of a lane line detection system according to an embodiment of this application;
FIG. 3 is a diagram of a feature map and an attention map according to an embodiment of this application;

FIG. 4 is a diagram of a structure of a network in an instance attention calculation module according to an embodiment of this application;

FIG. 5 is a diagram of an architecture of another lane line detection system according to an embodiment of this application;

FIG. 6 is a diagram of a structure of an iterative optimization module in a lane line detection system according to an embodiment of this application;

FIG. 7 is a diagram of an architecture of still another lane line detection system according to an embodiment of this application;

FIG. 8 is a diagram of a process of calculating an optimal match of a true value and a predicted value according to an embodiment of this application;

FIG. 9 is a diagram of a process of calculating a loss according to an embodiment of this application;

FIG. 10 is a diagram of an architecture of yet still another lane line detection system according to an embodiment of this application;

FIG. 11 is a diagram of an architecture of a training system according to an embodiment of this application;

FIG. 12 is a schematic flowchart of a lane line detection method according to an embodiment of this application;

FIG. 13 is a diagram of a structure of a lane line detection apparatus according to an embodiment of this application; and

FIG. 14 is a diagram of a structure of an electronic device according to an embodiment of this application.

## DESCRIPTION OF EMBODIMENTS

The term "and/or" in this specification describes an association relationship between associated objects and indicates that three relationships may exist. For example, A and/or B may indicate the following three cases: Only A exists, both A and B exist, and only B exists. The character "/" in this specification indicates an "or" relationship between associated objects. For example, A/B indicates A or B.

In the specification and claims of this application, the terms "first", "second", and the like are intended to distinguish between different objects, but do not indicate a particular order of the objects. For example, a first response message, a second response message, and the like are intended to distinguish between different response messages, but do not indicate a particular order of the response messages.

In embodiments of this application, the word such as "example" or "for example" is intended to indicate giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

In the descriptions of embodiments of this application, unless otherwise specified, "a plurality of" means two or more. For example, a plurality of processing units are two or more processing units, and a plurality of elements are two or more elements.

Usually, a semantic segmentation method or a non-semantic segmentation method may be used for lane line detection. The semantic segmentation method mainly involves performing pixel-by-pixel classification on an input image through a neural network used for semantic segmentation, and determining a class of each pixel (for example, belonging to a background, a lane line, a person, a vehicle, or the like) in the image, so that region division is performed, and then a lane line is detected. However, according to this method, the class of each pixel in the image needs to be determined for precise segmentation. Therefore, to achieve good detection effect, a large amount of accurate ground truth is required, leading to high costs. In addition, a model used in this method is large and requires strong computing power in use. However, computing power on a terminal side (such as a vehicle, a mobile phone, or an event data recorder) is usually limited. Therefore, this method used on the terminal side has poor real-time performance.

The non-semantic segmentation method mainly involves assuming the presence of a plurality of lane lines at a plurality of locations on an input image, then performing feature extraction on the assumed lane lines, and determining whether the lane lines are real. If the lane lines are real, the locations of the lane lines are corrected. This method has good real-time performance. However, because all assumed lane lines are straight lines, this method can only be used to detect a lane line in a straight line state, but has poor detection effect for a curved lane, and it is difficult to process a stop line, resulting in poor generalizability. In addition, according to this method, an additional sub-network has to be added when a pavement marker also needs to be detected, increasing a calculation amount, and reducing real-time performance of detection.

In view of this, embodiments of this application provide a lane line detection method. According to this method, feature extraction can be performed on a to-be-detected image by using a neural network, and to-be-detected lane lines can be distinguished at a channel layer of an extracted feature map. Therefore, this method requires no distinction between different lane lines on a single feature map, reducing a requirement for resolution of a feature required for intermediate calculation, reducing an amount of calculation for intermediate extraction of a large quantity of features, essentially improving real-time performance of an algorithm, and ensuring high precision of lane line detection. In addition, because this method requires no simplified assumption on a to-be-detected lane line, a lane line of any shape can be detected, improving generalizability of lane line detection.

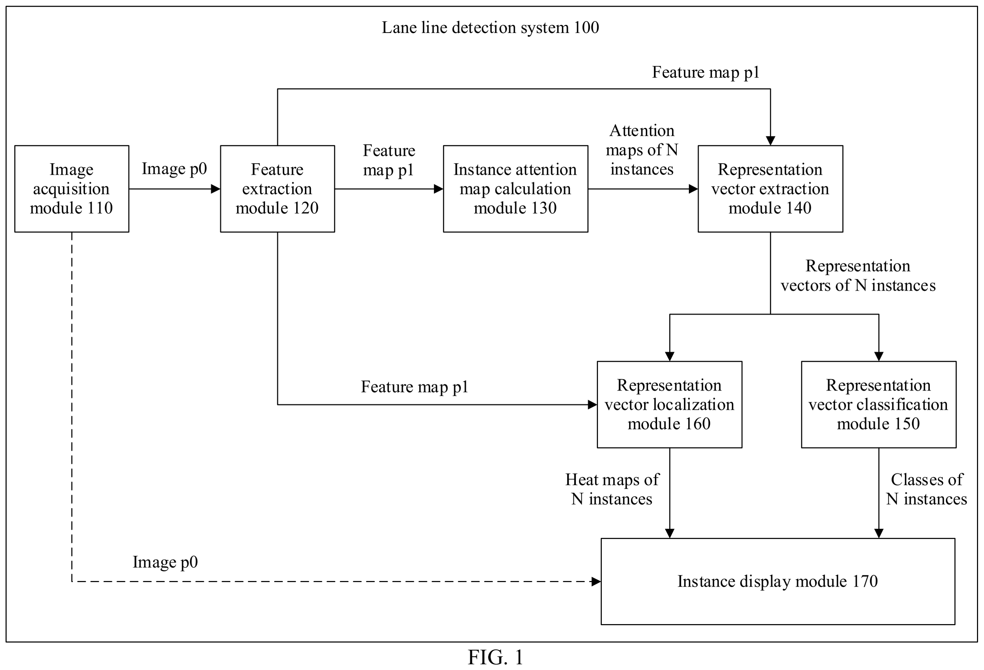

For example, FIG. 1 is a diagram of an architecture of a lane line detection system according to an embodiment of this application. As shown in FIG. 1, the lane line detection system 100 may include: an image acquisition module 110, a feature extraction module 120, an instance attention map calculation module 130, a representation vector extraction module 140, a representation vector classification module 150, a representation vector localization module 160, and an instance display module 170.

The image acquisition module 110 is mainly configured to acquire a to-be-detected image p0. For example, when the lane line detection system 100 is configured on an on-board terminal in a vehicle, the image acquisition module 110 may be, but is not limited to, an image capture apparatus that is on the vehicle and that is configured to capture an image of a road in front of the vehicle, for example, a camera. When the lane line detection system 100 is configured on an electronic device, for example, a mobile phone, the image acquisition module 110 may be, but is not limited to, a camera on the electronic device. In some embodiments, in addition to directly capturing the image p0, a manner of acquiring the image p0 by the image acquisition module 110 may also be receiving the image p0 captured by another image capture apparatus. This may be specifically determined based on an actual situation, and is not limited herein.

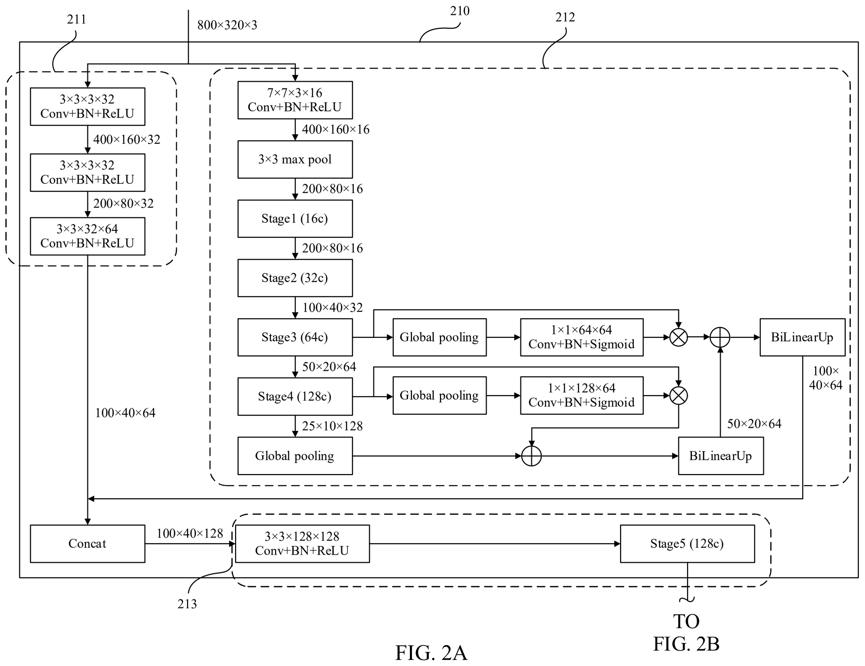

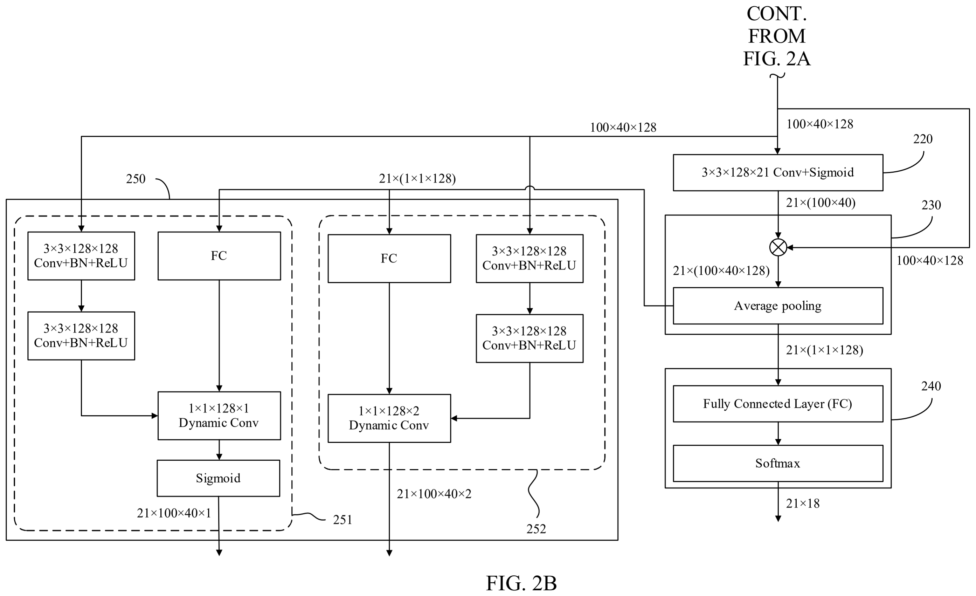

The feature extraction module 120 mainly performs feature extraction, by using a neural network or the like, on the image p0 acquired by the image acquisition module 110, to obtain a feature map p1. The neural network used by the feature extraction module 120 may be, but is not limited to, a convolutional neural network. For example, the neural network used by the feature extraction module 120 is a convolutional neural network, and a size of the image p0 is $800 \times 320$. As shown in FIG. 2A and FIG. 2B, a process of performing feature extraction on the image p0 is as follows: A convolution operation is performed through a sub-network 211 in a convolutional neural network 210 to obtain a $100 \times 40 \times 64$ feature map, and a convolution operation is performed through a sub-network 212 to obtain a $100 \times 40 \times 64$ feature map. Then, the two feature maps are concatenated to obtain a $100 \times 40 \times 128$ feature map (that is, the feature map p1). Finally, the feature map obtained through concatenation is optimized through a sub-network 213 and is output to obtain the feature map p1. Stage1 to Stage5 in the convolutional neural network 210 shown in FIG. 2A are all residual networks, with quantities of feature channels of 16, 32, 64, 128, and 128 respectively. In FIG. 2A and FIG. 2B, $a \times a \times b \times c$ Conv indicates that a size of a convolution kernel is $a \times a$, a channel of a convolution kernel is b, and a quantity of convolution kernels is c; BN indicates a batch normalization (batch normalization) layer; ReLu indicates a rectified linear unit (rectified linear unit); pool indicates a pooling layer; Concat indicates a feature concatenation layer; Sigmoid indicates an activation function; and Bilinearup indicates bilinear upsampling. In the convolutional neural network 210 shown in FIG. 2A, a depth of the sub-network 21 is small, so that the feature map extracted by the sub-network 21 can retain some detail information; and a depth of the sub-network 22 is large, so that the feature map extracted by the sub-network 22 can include semantic information at a higher layer. Finally, the feature maps extracted by the two sub-networks are concatenated, so that the finally obtained feature map can not only retain detail information of the original image, but also include semantic information of the original image, thereby facilitating subsequent processing.

The instance attention map calculation module 130 is mainly configured to perform calculation, separately by using N convolution kernels, on the feature map p1 extracted by the feature extraction module 120, to obtain attention maps of N instances, to distinguish a to-be-detected instance at a channel level. A value of N may be preset. An attention map of an instance is used to represent a weight of the instance at a location of each sample in the feature map p1. In some embodiments, the attention map may be used to identify locations of pixels that require attention in a subsequent task, and weights corresponding to these locations in the attention map may be greater than a preset value.

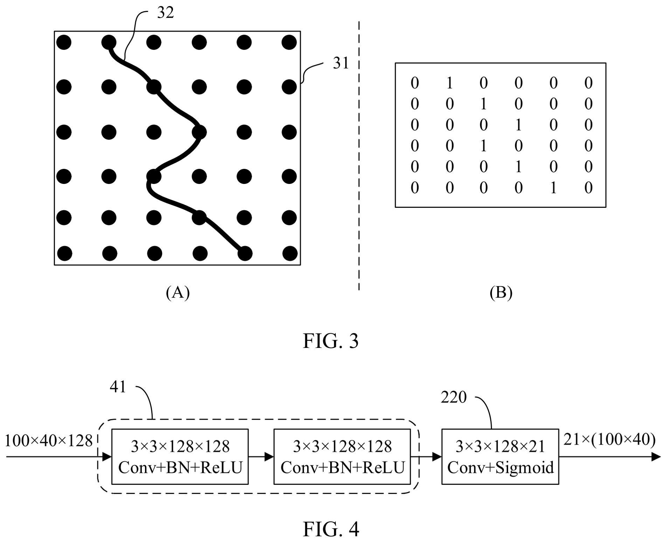

For example, as shown in (A) of FIG. 3, a feature map 31 includes 36 pixels, and the feature map 31 includes only one instance: a line 32. In this case, an attention map shown in (B) of FIG. 3 can be obtained by performing calculation on the feature map 31 by the instance attention map calculation module 130. In (B) of FIG. 3, a weight at a location at which the line 32 passes through a sample in the feature map 31 is 1, and a weight at a location at which the line 32 does not pass through a sample in the feature map 31 is 0. For example, a network structure of the instance attention map calculation module 130 may mainly include N convolution kernels and some activation functions. For example, still refer to FIG. 2A and FIG. 2B. A network used by the instance attention map calculation module 130 is a network 220, and the network 220 includes 21 convolution kernels with a convolution kernel size of $3 \times 3$ and a convolution kernel channel of 128, and one Sigmoid function. In the network 220 shown in FIG. 2B, when an input of the network 220 is an output of the convolutional neural network 210, an output of the network 220 may be 21 attention maps with a size of $100 \times 40$. In addition, to improve accuracy of calculation of the attention map of the instance, the extracted feature map may be first optimized, and then calculation is performed on an optimized feature map. In this case, a network for feature optimization may be added to the instance attention map calculation module 130. For example, as shown in FIG. 4, a network 41 for feature optimization may be added before the network 220.

The representation vector extraction module 140 is mainly configured to extract a representation vector of each of the N instances based on the feature map p1 extracted by the feature extraction module 120 and the attention maps of the N instances that are obtained through calculation by the instance attention map calculation module 130. A representation vector is used to represent an instance, and may be understood as a feature of an instance. For example, the representation vector extraction module 140 may first perform matrix multiplication on the attention map of each instance and the feature map p1, to obtain a feature map of each instance, and then perform average calculation on the feature map of each instance, to obtain representation vectors of the N instances. For example, still refer to FIG. 2A and FIG. 2B. A network used by the representation vector extraction module 140 may be a network 230. In the network 230, matrix multiplication may be first performed on the attention map of each instance and the feature map p1, and average calculation may be then performed on each calculation result through an average pooling (average pooling) layer, to obtain 21 $1\times1\times128$ representation vectors, that is, 21 feature vectors with a size of $1\times1$ and dimensionality of 128 dimensions. In some embodiments, a feature of an image may include features of all instances in the image.

The representation vector classification module 150 is mainly configured to classify the representation vectors extracted by the representation vector extraction module 140, to obtain a class of each of the N instances. Preset classes of the instances include at least a background and a lane line. In addition, the preset classes of the instances may further include a pavement marker, such as a guide arrow, a road traffic marking, a road traffic sign, a crosswalk line, a diversion line, and a rod-shaped object on a road. In this way, when the lane line is detected, the pavement marker can be detected, implementing joint detection of the lane line and the pavement marker. For example, still refer to FIG. 2A and FIG. 2B. A network used by the representation vector classification module 150 may be a network 240. The network 240 may include a fully connected layer (fully connected layer, FC) and a softmax layer. The representation vector classification module 150 may first classify the representation vectors of the instances by using the FC layer, and then optimize a classification result by using the softmax layer, to obtain the class of each of the N instances. In some embodiments, the FC layer in the network 240 may be replaced with a one-dimensional convolution. This may be specifically determined based on an actual situation, and is not limited herein. In some embodiments, a class of an instance may be understood as a type of an instance, that is, a class to which the instance belongs. For example, an instance may belong to a class of lane lines, a class of backgrounds, a class of guide arrows, or a class of road traffic signs.

The representation vector localization module 160 is mainly configured to calculate, based on each representation vector extracted by the representation vector extraction module 140 and the feature map p1 extracted by the feature extraction module 120, a weight of each of the N instances at a location of a sample in the feature map p1, to obtain a heat map (heatmap) of each instance on the feature map p1. A heat map of an instance is used to represent a weight of the instance at a location of each sample in the feature map p1. For example, the representation vector localization module 160 may calculate a dynamic convolution kernel by using a representation vector of an instance, and perform conditionally parameterized convolution on the feature map p1 by using the convolution kernel, to obtain a heat map of the instance. For example, still refer to FIG. 2A and FIG. 2B. A network used by the representation vector localization module 160 to calculate the heat map of the instance may be a sub-network 251 in a network 250. In the sub-network 251, calculation may be performed on a representation vector of an instance by using an FC layer, to obtain a parameter of a convolution kernel (that is, $1\times1\times128\times1$ Dynamic Conv) used subsequently, the feature map p1 is then optimized, an optimized feature map p1 is input to the calculated convolution kernel for calculation, and a result output by the convolution kernel is processed through a Sigmoid function, to obtain a heat map of the corresponding instance. For example, the heat map may be referred to as a localization result.

In addition, the representation vector localization module 160 may be further configured to calculate, based on each representation vector extracted by the representation vector extraction module 140 and the feature map p1 extracted by the feature extraction module 120, an offset of each of the N instances at a location of a sample in the feature map p1, to obtain an offset map of each instance on the feature map p1. An offset map of an instance is used to represent a precision loss in mapping the instance to the original image, that is, a deviation between a location of the instance on the original image and a location at which the instance is mapped to the original image based on the heat map of the instance. For example, the representation vector localization module 160 may calculate a dynamic convolution kernel by using a representation vector of an instance, and perform conditionally parameterized convolution on the feature map p1 by using the convolution kernel, to obtain an offset map of the instance. For example, still refer to FIG. 2A and FIG. 2B. A network used by the representation vector localization module 160 to calculate the offset map of the instance may be a sub-network 252 in the network 250. In the sub-network 252, calculation may be performed on a representation vector of an instance by using an FC layer, to obtain a parameter of a convolution kernel (that is, $1\times1\times128\times2$ Dynamic Conv) used subsequently, the feature map p1 is then optimized, and an optimized feature map p1 is input to the calculated convolution kernel for calculation, to obtain an offset map of the corresponding instance. For example, when the offset map is used, the heat map and the offset map may be referred to as a localization result.

The instance display module 170 is mainly configured to display a required instance (such as a lane line or a pavement marker) based on the classes of the N instances output by the representation vector classification module 150 and the heat maps (or the heat maps and the offset maps) of the N instances output by the representation vector localization module 160. For example, when a class of an instance is a preset class that needs to be displayed, a location of the instance (that is, a location of the instance in the original image p0) may be calculated based on a heat map (or a heat map and an offset map) of the instance, and the instance is displayed in the image p0.

In some embodiments, when a location of an instance is calculated based on a heat map of the instance, a location of each sample corresponding to a weight greater than a preset value in the heat map of the instance is mapped to the original image p0, to obtain the location of the instance in the image p0. A location of a sample may be mapped to the image p0 at a preset mapping ratio. For example, when the mapping ratio is 1:10, if coordinates of a sample corresponding to a weight greater than a preset value in the heat map of the instance are (x, y), coordinates of the instance in the original image p0 may be (10x, 10y). The preset mapping ratio may be obtained based on a network structure of a neural network used by the lane line detection system 100. For example, when the neural network needs to scale down the original image by a factor of k to obtain a heat map of an instance, the mapping ratio is 1:k.

In some embodiments, when a location of an instance is calculated based on a heat map and an offset map of the instance, locations of pixels corresponding to weights greater than a preset value are first selected from the heat map of the instance. Then, offsets of these locations are found from the offset map, and these locations are corrected based on these offsets. Finally, the corrected locations are mapped to the original image p0, to obtain the location of the instance in the image p0.

In this embodiment, when displaying the instance based on the location of the instance in the original image p0, the instance display module 170 may identify the instance with a specific color such as red or green. In this way, the instance can be visualized in the original image p0.

The foregoing describes the lane line detection system 100 provided in embodiments of this application. It can be learned from the foregoing description that, during lane line detection, after extracting a feature map, the system distinguishes, at a channel level, attention maps of some instances included in the feature map, then calculates a representation vector of each instance by using an attention map of each instance and the extracted feature map, and performs detection by using the representation vector of each instance. During the detection, semantic segmentation and the like are not performed. Therefore, dependence on high-resolution feature calculation and complex post-processing is eliminated in principle, improving real-time performance of an algorithm, and ensuring high precision of lane line detection. In addition, during the detection, no simplified assumption is made on a lane line, so that a lane line of any shape can be detected, resulting in high generalizability.

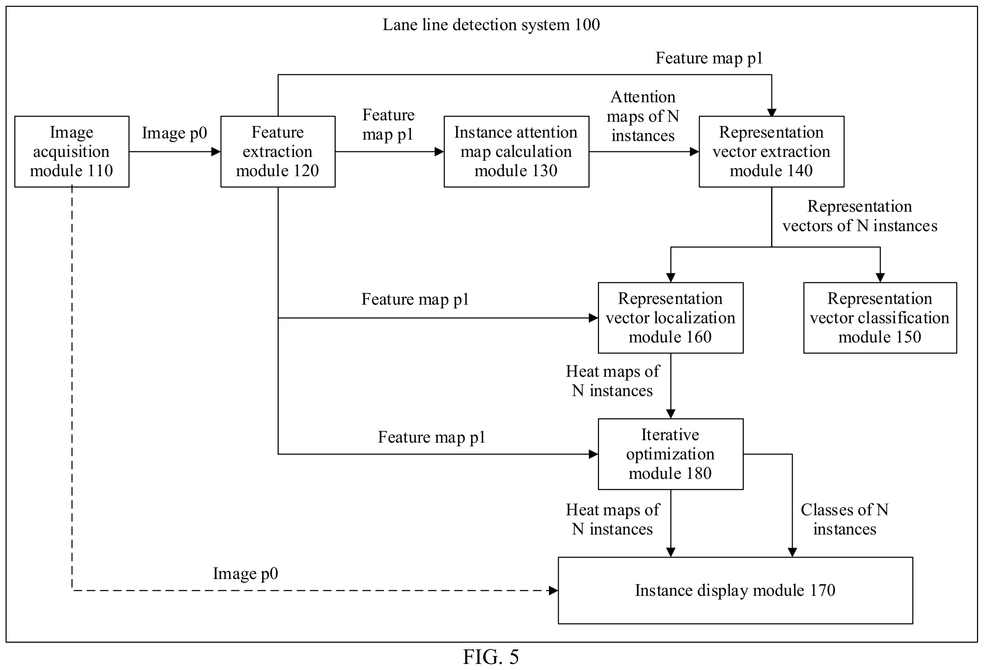

In some embodiments, because different devices have different computing power, to further improve accuracy of a detection result, an iterative optimization module may be further added to the lane line detection system 100. The iterative optimization module may determine a quantity of times of iterative optimization based on computing power of a device equipped with the lane line detection system 100, so that the vehicle detection system 100 can match the device that carries the lane line detection system 100. For example, when the computing power of the device is in a first computing power range, the quantity of times of iterative optimization is 0, and in this case, the iterative optimization module is not enabled; or when the computing power of the device is in a second computing power range, the quantity of times of iterative optimization is 2, and in this case, the iterative optimization module is enabled, and a quantity of iterations is 2. A lower limit value of the second computing power range is greater than an upper limit value of the first computing power range. The lane line detection system with the iterative optimization module added may be shown in FIG. 5.

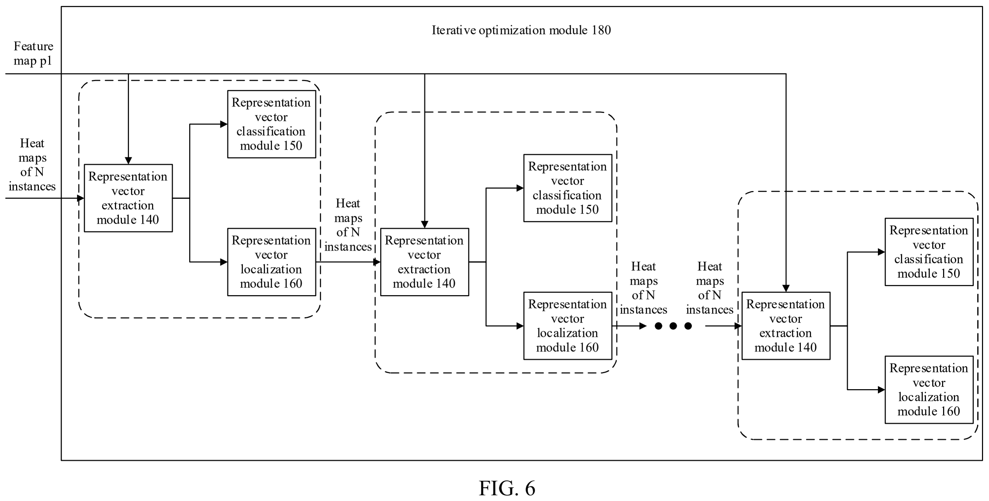

In FIG. 5, the iterative optimization module 180 is mainly configured to perform iterative calculation based on the heat maps of the N instances obtained through calculation by the representation vector localization module 160 and the feature map p1 output by the feature extraction module 120, to optimize locations and classes of the N instances. The iterative optimization module 180 may mainly include the representation vector extraction module 140, the representation vector localization module 160, and the representation vector classification module 150. For example, as shown in FIG. 6, the iterative optimization module 180 may include at least one representation vector extraction module 140, at least one representation vector localization module 160, and at least one representation vector classification module 150. In FIG. 6, one representation vector extraction module 140, one representation vector localization module 160, and one representation vector classification module 150 may be understood as a combination. In addition, each time using the feature map p1, the iterative optimization module 180 may first optimize the feature map, and perform subsequent calculation by using an optimized feature map. In FIG. 6, an output result of the iterative optimization module 180 may be a result obtained after m$^{th}$ iterative optimization.

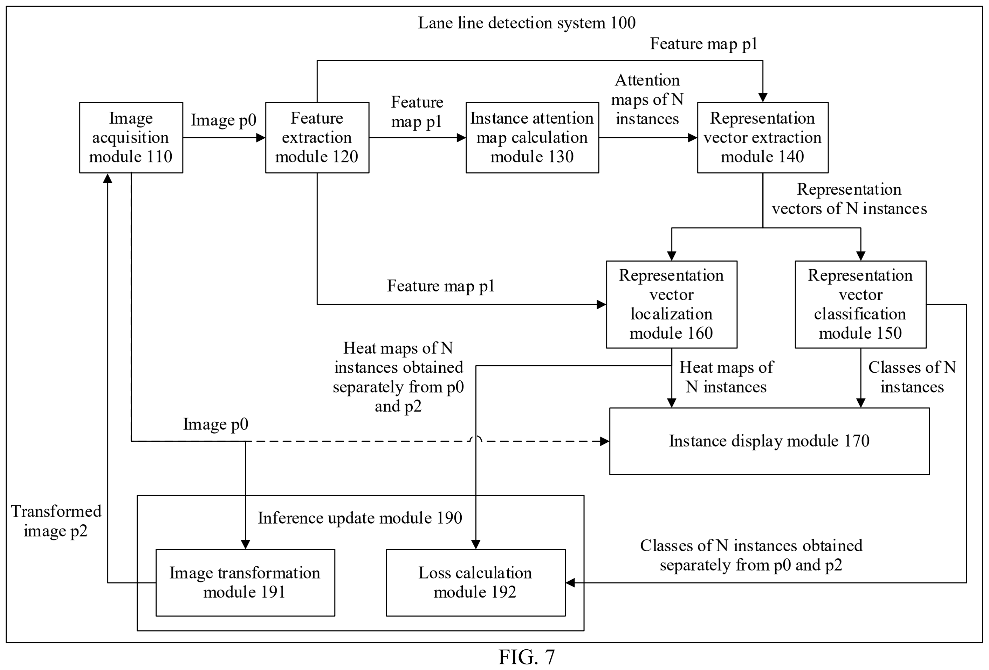

In some embodiments, to further improve generalizability of the lane line detection system 100, an inference update module may be further added to the lane line detection system 100. A parameter of a network model in each module in the lane line detection system 100 is fine-tuned by using the inference update module, so that the lane line detection system 100 can reach a better balance between computing power consumption and performance on devices with different computing power, achieving better device generalizability. The lane line detection system with the inference update module added may be shown in FIG. 7.

In FIG. 7, the inference update module 190 may include an image transformation module 191 and a loss calculation module 192. The image transformation module 191 is mainly configured to randomly perform transformation, such as rotation (for example, a rotation angle may be -10° to 10°), flipping left and right, or translation (for example, an up-down translation range may be -20 pixels to 20 pixels), on the image p0 acquired by the image acquisition module 110, to obtain a transformed image p2. After the image transformation module 191 completes image transformation, the lane line detection system 100 may detect instances in the image p2, to obtain locations and classes of N instances.

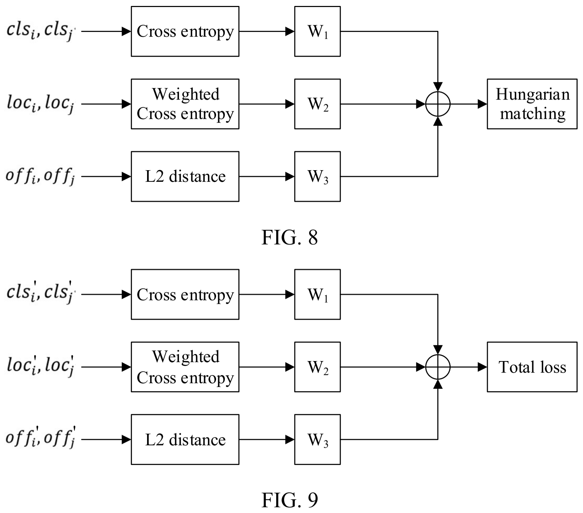

The loss calculation module 192 is mainly configured to perform loss calculation by using a detection result corresponding to the original image (that is, the image p0) as a true value and using the transformed image (that is, the image p2) as a predicted value. During loss calculation, an optimal match of the true value and the predicted value may be found first, that is, the true value and the most similar predicted value, or the predicted value and the most similar true value. Then, the loss calculation is performed based on the obtained optimal match of the true value and the predicted value, to reduce a calculation amount and increase a calculation speed. For example, it is assumed that true values are $cls_i$, $loc_i$, and $off_i$, predicted values are $cls_j$, $loc_j$, and $off_j$, and values of $i$ and $j$ are both in [1, N], where $cls_i$ is a class of an $i^{th}$ instance, $loc_i$ is a heat map of an $i^{th}$ instance, and $off_i$ is an offset map of an $i^{th}$ instance. In this case, a cost function may be constructed and solved by using an optimization algorithm to obtain an optimal match of the true value and the predicted value. For example, as shown in FIG. 8, calculation is performed on *cls, loc,* and *off* respectively using cross entropy, weighted cross entropy, and L2 distance, to obtain cost functions of the true values and the predicted values. Then, the three cost functions are multiplied by respective weight coefficients (that is, W1, W2, and W3 in the figure) and added together. Finally, a total cost function is solved by using a Hungarian matching algorithm, to obtain an optimal match.

After obtaining the optimal match of the true value and the predicted value, the loss calculation module 192 may calculate a loss between each predicted value and an optimal match of the predicted value, to obtain a total loss. For example, the loss calculation module 192 may allocate and use the cross entropy, the weighted cross entropy, and the L2 distance as loss functions of *cls, loc, and off* respectively. After losses are calculated, these losses may be weighted and summed to obtain the total loss. For example, as shown in FIG. 9, a loss between $cls_i'$ and $cls_j'$ may be calculated by using a cross entropy function, a loss between $loc_i'$ and $loc_j'$ may be calculated by using a weighted cross entropy function, and a loss between $off_i'$ and $off_j'$ may be calculated by using a weighted cross entropy function. Then, the losses obtained through calculation are weighted and summed, to obtain a total loss, where $cls_i'$ and $cls_j'$ are an optimal match of the true value and the predicted value. In some embodiments, because an instance that belongs to a class of backgrounds usually has no localization result, for a detection result corresponding to a background in an original image, a localization loss may not be calculated, and only a class loss is calculated.

After the loss calculation module 192 calculates the total loss, a parameter of a network in each module may be adjusted to minimize the total loss. In this way, the network in each module in the lane line detection system 100 can be updated.

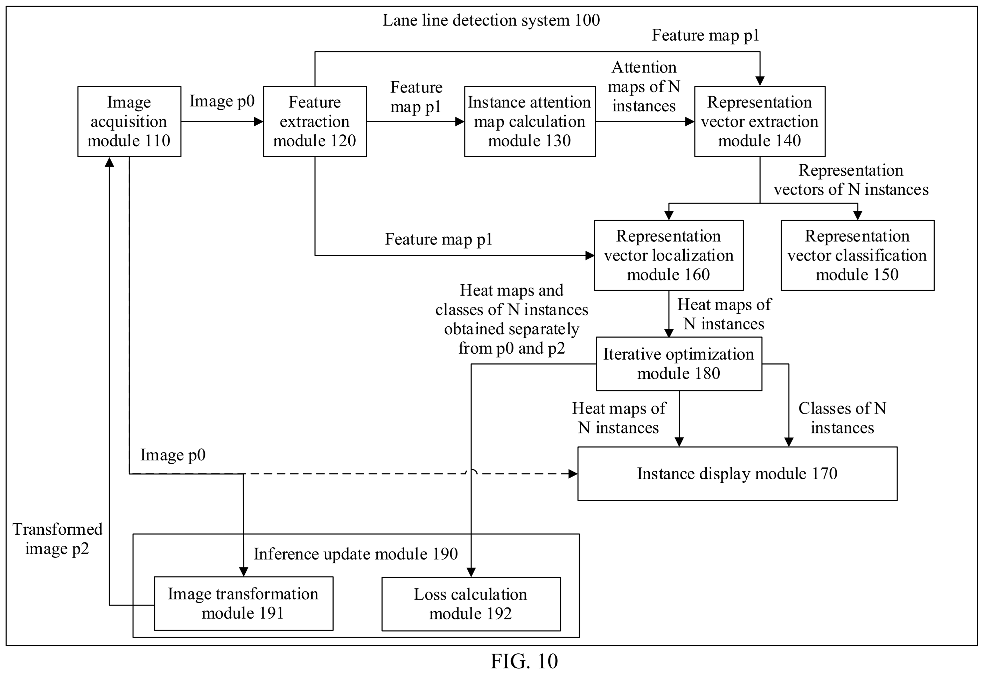

In some embodiments, the iterative optimization module 180 shown in FIG. 5 and the inference update module 190 shown in FIG. 7 may be both configured in the lane line detection system 100. Specifically, as shown in FIG. 10, in this case, when the iterative optimization module 180 is used during detection, an input of the loss calculation module 192 may be an output of the iterative optimization module 180; or when the iterative optimization module 180 is not used during detection, an input of the loss calculation module 192 may be outputs of the representation vector localization module 160 and the representation vector classification module 150.

It should be understood that, in the lane line detection system 100 described in the foregoing embodiments, all modules except the image acquisition module 110, the instance display module 170, and the inference update module 190 may be obtained through pre-training. The following describes a training system of these modules.

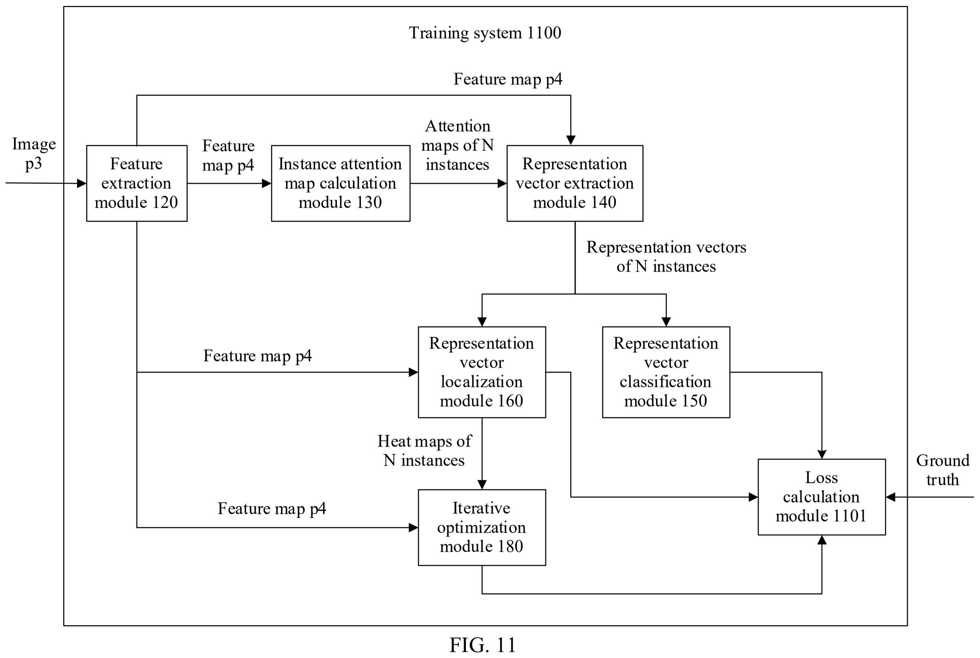

For example, FIG. 11 is a diagram of an architecture of a training system according to an embodiment of this application. As shown in FIG. 11, the training system 1100 includes: a loss calculation module 1101, and the feature extraction module 120, the instance attention map calculation module 130, the representation vector extraction module 140, the representation vector classification module 150, the representation vector localization module 160, and the iterative optimization module 180 that are in the foregoing lane line detection system 100. For the modules in the lane line detection system 100, refer to the foregoing descriptions. Details are not described herein again. In addition, during training, a quantity of iterations for the iterative optimization module 180 may be preset.

An input of the loss calculation module 1101 is an output of the representation vector classification module 150, an output of the representation vector localization module 160, a result obtained through each iteration by the iterative optimization module 180, and ground truth. The loss calculation module 1101 may calculate a loss by using the ground truth as a true value and using the output of the representation vector classification module 150, the output of the representation vector localization module 160, and the result obtained through each iteration by the iterative optimization module 180 as predicted values.

For ease of understanding, the following uses an example in which the quantity of iterations for the iterative optimization module 180 is 3 for description. During training, for each image, when the quantity of iterations for the iterative optimization module 180 is 3, the iterative optimization module 180 may output three groups of detection results (that is, predicted values), the representation vector classification module 150 and the representation vector localization module 160 may output one group of detection results, and each group of detection results may include classes and heat maps of N instances. Certainly, each group of detection results may also include offset maps of the N instances. This is not limited herein. The following uses an example in which each group of results includes classes, heat maps, and offset maps of N instances for description. The detection results may be:

$$cls_i^s, loc_i^s, off_i^s, i \in [1, N], s \in [0,3]$$

Herein, $cls_i^s$ is a class of an $i$th instance in an $s$th group of detection results; $loc_i^s$ is a heat map of the $i$th instance in the $s$th group of detection results; and $off_i^s$ is an offset map of the $i$th instance in the $s$th group of detection results.

The ground truth may be one group of data (that is, a true value) of an image, and may be denoted as:

$$cls_j^{gt}, loc_j^{gt}, off_j^{gt}, j \in [0,M]$$

Herein, $cls_j^{gt}$ is a class of a $j$th instance; $loc_j^{gt}$ is a heat map of the $j$th instance; $off_j^{gt}$ is an offset map of the $j$th instance; and M is a quantity of instances labeled in the image.

After acquiring the predicted value and the true value, the loss calculation module 1101 may perform loss calculation. Similar to the process of loss calculation of the loss calculation module 192 in the inference update module 190 described in FIG. 7, the loss calculation module 1101 may first find an optimal match of the true value and the predicted value, and then perform loss calculation based on the obtained optimal match of the true value and the predicted value, to reduce a calculation amount and increase a calculation speed. For an $i$th value in a group of predicted values, an optimal match result obtained through calculation by the loss calculation module 1101 may be:

$$\sigma(i) \in [-1, M]$$

Herein, $\sigma(i)$ indicates that a true value that is used to calculate a loss and that corresponds to the $i$th value in the group of predicted values is the $\sigma(i)$th. For example, when the $i$th value in the group of predicted values is a class, $\sigma(i) = 3$ indicates that the true value that is used to calculate the loss and that corresponds to the $i$th value in the group of predicted values is the third class in the true value. $\sigma(i) = -1$ indicates that the class of the $i$th value in the group of predicted values is a background.

After obtaining the optimal match of the true value and the predicted value, the loss calculation module 1101 may calculate a loss between a predicted value in each group and an optimal match of the predicted value, to obtain a total loss. For a calculation process, refer to the foregoing description of the loss calculation module 192 in the inference update module 190 in FIG. 7. Details are not described herein again.

After the loss calculation module 1101 calculates the total loss, a parameter of a network in each module may be adjusted to minimize the total loss. In this way, the network in a corresponding module in the lane line detection system 100 can be trained.

After the training system 1100 completes training, the feature extraction module 120, the instance attention map calculation module 130, the representation vector extraction module 140, the representation vector classification module 150, the representation vector localization module 160, and the iterative optimization module 180 may be delivered to a corresponding terminal side, to detect an instance, for example, a lane line, on the terminal side by using these modules.

The foregoing describes the lane line detection system 100 and the training system 1100 provided in embodiments of this application. The following describes, based on the content in the foregoing embodiments, a lane line detection method provided in embodiments of this application.

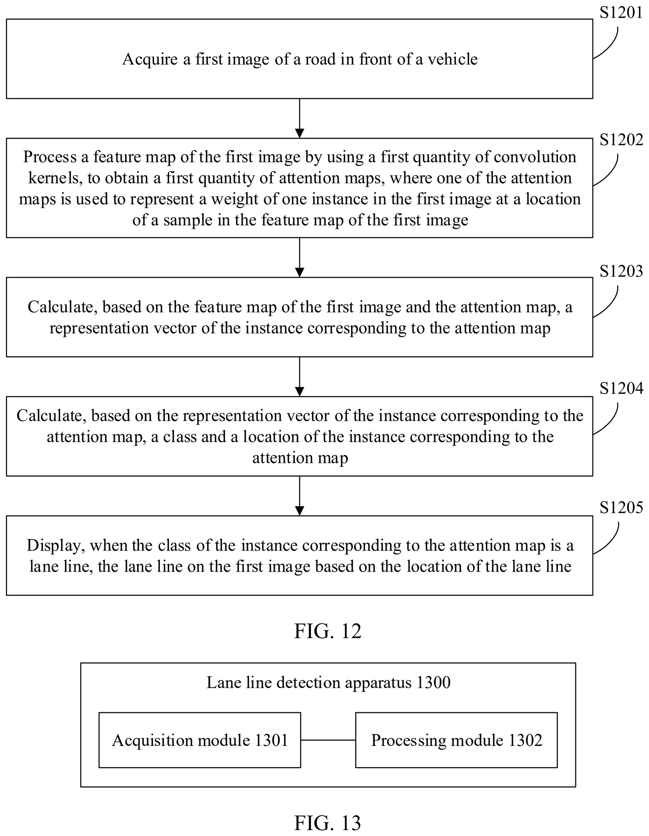

For example, FIG. 12 is a schematic flowchart of a lane line detection method according to an embodiment of this application. It may be understood that the method may be performed by any apparatus, device, platform, or device cluster that has computing and processing capabilities. As shown in FIG. 12, the lane line detection method may include the following steps.

S1201: Acquire a first image of a road in front of a vehicle.

In this embodiment, an image of a road in front of a vehicle may be acquired in real time. For example, when a user drives a vehicle and uses map navigation software, an image of a road in front of the vehicle may be captured in real time by using an image capture apparatus (for example, a camera) inside or outside the vehicle. Certainly, the image of the road in front of the vehicle may also be acquired in advance. For example, when a map is made, a vehicle may be driven to capture images and the like on roads in advance. This may be specifically determined based on an actual situation, and is not limited herein. For example, the first image may be a static image, or may be a video frame in a video image. In some embodiments, the image of the road in front of the vehicle may be acquired by, but not limited to, the image acquisition module 110 described in FIG. 1.

S1202: Process a feature map of the first image by using a first quantity of convolution kernels, to obtain a first quantity of attention maps, where one of the attention maps is used to represent a weight of one instance in the first image at a location of a sample in the feature map of the first image.

In this embodiment, after the first image is acquired, feature extraction may be first performed on the first image, to obtain the feature map of the first image. For example, feature extraction may be performed on the first image by the feature extraction module 120 described in FIG. 1.

After the feature map of the first image is extracted, the feature map of the first image may be processed by using N convolution kernels, to obtain N attention maps. One attention map is used to represent a weight of one instance in the first image at a location of a sample in the feature map of the first image, and may identify a location of a sample that requires attention in a subsequent task. In this way, a to-be-detected instance is distinguished at a channel level. For example, N may also be referred to as the first quantity, and a value of N may be preset. For example, the attention map may be obtained through calculation by, but not limited to, the instance attention map calculation module 130 described in FIG. 1.

S1203: Calculate, based on the feature map of the first image and the attention map, a representation vector of the instance corresponding to the attention map.

In this embodiment, a feature map of an instance corresponding to each attention map may be first obtained based on the feature map of the first image and each attention map. For example, for any attention map, matrix multiplication may be performed on the attention map and the feature map of the first image, to obtain a feature map of an instance corresponding to the attention map. Then, a representation vector of the instance corresponding to each attention map is obtained based on the feature map of the instance corresponding to each attention map. For example, for a representation vector of an instance corresponding to any attention map, average calculation may be performed on the feature map of the instance corresponding to the attention map, to obtain the representation vector of the instance corresponding to the attention map. A representation vector of an instance may indicate a feature of the instance. For example, the representation vector of the instance corresponding to the attention map may be obtained through calculation by, but not limited to, the representation vector extraction module 140 described in FIG. 1.

S1204: Calculate, based on the representation vector of the instance corresponding to the attention map, a class and a location of the instance corresponding to the attention map.

In this embodiment, after the representation vector of the instance corresponding to the attention map is obtained, the class and the location of the instance corresponding to the attention map may be calculated based on the representation vector of the instance corresponding to the attention map.

For the class of the instance corresponding to the attention map, the representation vector of the instance corresponding to the attention map may be input to a classification network, to process the representation vector of the instance corresponding to the attention map through the classification network, to obtain the class of the instance corresponding to the attention map. For example, the classification network may be, but is not limited to, a fully connected layer or a one-dimensional convolutional layer. For example, the representation vector of the instance corresponding to the attention map may be processed by, but not limited to, the representation vector classification module 150 in FIG. 1, to obtain the class of the instance corresponding to the attention map.

For the location of the instance corresponding to the attention map, the weight of the instance corresponding to the attention map at the location of the sample in the feature map of the first image may be calculated based on the feature map of the first image and the representation vector of the instance corresponding to the attention map, to obtain a heat map of the instance corresponding to the attention map. The heat map is used to represent the weight of the instance corresponding to the attention map at the location of the sample in the feature map of the first image. In addition, a location of a sample corresponding to a weight greater than a preset value in the heat map is mapped (for example, mapped at a specific ratio) to the first image, so that the location of the instance can be obtained. For example, the feature map of the first image and the representation vector of the instance corresponding to the attention map may be processed by, but not limited to, the representation vector localization module 160 in FIG. 1, to obtain the heat map of the instance corresponding to the attention map.

In addition, when the feature map of the first image is extracted, processing, for example, downsampling, is usually performed on the first image, and interpolation or another algorithm is usually used during the processing. In this case, a location of a sample in the feature map of the first image does not necessarily completely correspond to a location of a sample in the first image. Consequently, there are some deviations when the location of the instance indicated in the heat map is mapped to the first image. Therefore, to increase detection precision, these deviations may be further calculated, to correct the location of the instance based on these deviations. When these deviations are calculated, an offset of the instance corresponding to the attention map at the location of the sample in the feature map of the first image may be calculated based on the feature map of the first image and the representation vector of the instance corresponding to the attention map, to obtain an offset map of the instance corresponding to the attention map. The offset map is used to represent a deviation between a real location of the instance corresponding to the attention map on the first image and a location at which the instance corresponding to the attention map is mapped to the first image. In this embodiment, the location of the instance corresponding to the attention map may be a location obtained by first correcting, based on the offset map of the instance, the location of the sample corresponding to the weight greater than the preset value in the heat map of the instance, and then mapping a corrected location to the first image. For example, if a weight in the heat map is greater than the preset value, a location of a sample corresponding to the weight is (x, y), and an offset corresponding to the location in the offset map is $(\Delta x, \Delta y)$, a location of a sample that corresponds to the weight and that is obtained through calculation is $(x+\Delta x, y+\Delta y)$. If a mapping ratio is 1:k, a location obtained by mapping $(x+\Delta x, y+\Delta y)$ to the first image is $(k(x+\Delta x), k(y+\Delta y))$. For example, the feature map of the first image and the representation vector of the instance corresponding to the attention map may be processed by, but not limited to, the representation vector localization module 160 in FIG. 1, to obtain the offset map of the instance corresponding to the attention map.

S1205: Display, when the class of the instance corresponding to the attention map is a lane line, the lane line on the first image based on the location of the lane line.

In this embodiment, when the class of the instance corresponding to the attention map is a lane line, the lane line may be displayed on the first image based on the location of the lane line. For example, corresponding to a sample on a lane line, when a location of the sample is $(x+\Delta x, y+\Delta y)$, the location $(x+\Delta x, y+\Delta y)$ on the first image may be identified with a specific color. In this case, after all pixels on the lane line are identified, the lane line may be displayed on the first image. For example, the lane line may be displayed on the first image by, but not limited to, the instance display module 170 described in FIG. 1.

In this way, during lane line detection, attention maps of some instances included in a feature map of a to-be-detected image (that is, the first image) are distinguished at a channel level, a representation vector of each instance is then calculated by using an attention map of each instance and the feature map of the to-be-detected image, and lane line detection is performed by using the representation vector of each instance, so that dependence on high-resolution feature calculation and complex post-processing is eliminated in principle, improving real-time performance of an algorithm, and ensuring high precision of lane line detection. In addition, during the detection, no simplified assumption is made on a lane line, so that a lane line of any shape can be detected, resulting in high generalizability.

In some embodiments, when the class of the instance corresponding to the attention map is a pavement marker, the pavement marker may be displayed on the first image based on the location of the pavement marker. In this way, when the lane line is detected, the pavement marker can be detected, implementing joint detection of the lane line and the pavement marker.

In some embodiments, a maximum value of a quantity of instances displayed on the first image may be the quantity of convolution kernels in S1202. Because a quantity of convolution kernels is predetermined, a quantity of instances distinguished at a channel level is also determined. Therefore, a maximum value of a quantity of finally recognized instances is also determined. For example, when the quantity of convolution kernels is 10, and a quantity of lane lines on the first image is 20, if an instance of a background has to be displayed, a quantity of finally displayed lane lines is 9.

In some embodiments, the lane line detection method described in FIG. 12 may be performed by a terminal device (such as a vehicle, an on-board terminal in a vehicle, or a mobile phone). In this case, a preset relationship table between computing power and a quantity of iterations may be queried based on computing power of the terminal device, to obtain a quantity of iterations required for calculating, on the terminal device, a class and a location of an instance corresponding to an attention map. Then, the class and the location of the instance corresponding to the attention map are calculated based on the obtained quantity of iterations. When the quantity of iterations is greater than or equal to 1, input data of each iteration is the feature map of the first image and a heat map that is of the instance corresponding to the attention map and that is obtained through previous calculation, and output data of each iteration includes a heat map of the instance corresponding to the attention map. In this way, when the computing power of the terminal device is high, a plurality of iterations can be performed to improve accuracy of detection. For example, the quantity of iterations may be calculated and/or the class and the location of the instance corresponding to the attention map may be calculated based on the quantity of iterations by, but not limited to, the iterative optimization module 180.

In some embodiments, the feature map of the first image, the attention map, the representation vector, and the class and the location of the instance corresponding to the attention map that are described in FIG. 12 may all be obtained through calculation by using a neural network model. For example, the neural network model may include, but is not limited to, the feature extraction module 120, the instance attention map calculation module 130, the representation vector extraction module 140, the representation vector classification module 150, and the representation vector localization module 160, or the feature extraction module 120, the instance attention map calculation module 130, the representation vector extraction module 140, the representation vector classification module 150, the representation vector localization module 160, and the iterative optimization module 180. In this case, after the detection of the lane line in the first image is completed, transformation, for example, random rotation, may be performed on the first image, to obtain a second image. Then, the second image is processed by using the neural network model, to obtain a class and a location of an instance in the second image. Next, loss calculation may be performed by using the class and the location that are of the instance corresponding to the attention map and that are obtained through calculation of the first image as a true value, and using the class and the location of the instance in the second image as a predicted value, to obtain a first loss. Finally, a parameter in the neural network model may be updated with a target of minimizing the first loss. In this way, the neural network model can be updated, improving generalizability of the neural network model. For example, this process may be completed by, but not limited to, the inference update module 190.

The foregoing describes the lane line detection method provided in embodiments of this application. The following describes, based on the method in the foregoing embodiments, a lane line detection apparatus provided in embodiments of this application.

For example, FIG. 13 is a diagram of a structure of a lane line detection apparatus according to an embodiment of this application. As shown in FIG. 13, the lane line detection apparatus may include: an acquisition module 1301 and a processing module 1302. The acquisition module 1301 is configured to acquire a first image of a road in front of a vehicle. The processing module 1302 is configured to process a feature map of the first image by using a first quantity of convolution kernels, to obtain a first quantity of attention maps, where one of the attention maps is used to represent a weight of one instance in the first image at a location of a sample in the feature map of the first image. The processing module 1302 is further configured to calculate, based on the feature map of the first image and the attention map, a representation vector of the instance corresponding to the attention map. The processing module 1302 is further configured to calculate, based on the representation vector of the instance corresponding to the attention map, a class and a location of the instance corresponding to the attention map. The processing module 1302 is further configured to display, when the class of the instance corresponding to the attention map is a lane line, the lane line on the first image based on the location of the lane line.

In some embodiments, the processing module 1302 is further configured to: display, when the class of the instance corresponding to the attention map is a pavement marker, the pavement marker on the first image based on the location of the pavement marker.

In some embodiments, a maximum value of a quantity of instances displayed on the first image is the first quantity.

In some embodiments, when calculating, based on the feature map of the first image and the attention map, the representation vector of the instance corresponding to the attention map, the processing module 1302 is specifically configured to: obtain, based on the feature map of the first image and the attention map, a feature map of the instance corresponding to the attention map; and obtain, based on the feature map of the instance corresponding to the attention map, the representation vector of the instance corresponding to the attention map.

In some embodiments, when calculating, based on the representation vector of the instance corresponding to the attention map, the class and the location of the instance corresponding to the attention map, the processing module 1302 is specifically configured to: process, through a classification network, the representation vector of the instance corresponding to the attention map, to obtain the class of the instance corresponding to the attention map; calculate the weight of the instance corresponding to the attention map at the location of the sample in the feature map of the first image based on the feature map of the first image and the representation vector of the instance corresponding to the attention map, to obtain a heat map of the instance corresponding to the attention map, where the heat map is used to represent the weight of the instance corresponding to the attention map at the location of the sample in the feature map of the first image; and map, to the first image, a location of a sample corresponding to a weight greater than a preset value in the heat map, to obtain the location of the instance corresponding to the attention map.

In some embodiments, the processing module 1302 is further configured to: calculate an offset of the instance corresponding to the attention map at the location of the sample in the feature map of the first image based on the feature map of the first image and the representation vector of the instance corresponding to the attention map, to obtain an offset map of the instance corresponding to the attention map, where the offset map is used to represent a deviation between a real location of the instance corresponding to the attention map on the first image and the location at which the instance corresponding to the attention map is mapped to the first image. In this case, when mapping, to the first image, the location of the sample corresponding to the weight greater than the preset value in the heat map, to obtain the location of the instance corresponding to the attention map, the processing module is specifically configured to: correct, based on the offset map of the instance corresponding to the attention map, the location of the sample corresponding to the weight greater than the preset value in the heat map, and map a corrected location to the first image, to obtain the location of the instance corresponding to the attention map.

In some embodiments, the lane line detection apparatus is deployed on a terminal device, and the processing module 1302 is further configured to: obtain, based on computing power of the terminal device, a quantity of iterations required for calculating the class and the location of the instance corresponding to the attention map; and calculate, based on the quantity of iterations, the class and the location of the instance corresponding to the attention map, where when the quantity of iterations is greater than or equal to 1, input data of each iteration is the feature map of the first image and a heat map that is of the instance corresponding to the attention map and that is obtained through previous calculation, and output data of each iteration includes a heat map of the instance corresponding to the attention map.

In some embodiments, the attention map, the representation vector, and the class and the location of the instance corresponding to the attention map are all obtained through calculation by using a neural network model. In this case, the processing module 1302 is further configured to: process a second image by using the neural network model, to obtain a class and a location of an instance in the second image, where the second image is obtained based on transformation of the first image; obtain a first loss based on the class and the location of the instance corresponding to the attention map and the class and the location of the instance in the second image; and update a parameter in the neural network model with a target of minimizing the first loss.

It should be understood that the foregoing apparatus is configured to perform the method in the foregoing embodiments. Implementation principles and technical effects of corresponding program modules in the apparatus are similar to those described in the foregoing method. For a working process of the apparatus, refer to the corresponding process in the foregoing method. Details are not described herein again.

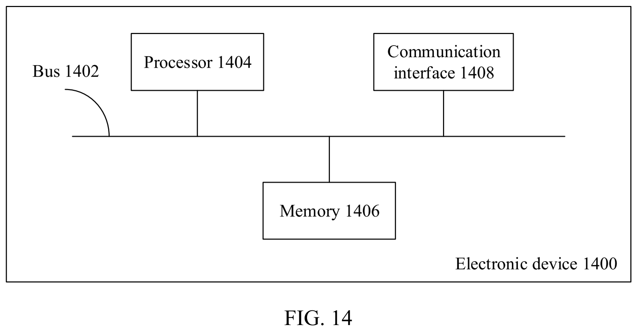

Based on the method in the foregoing embodiments, an embodiment of this application further provides an electronic device 1400. As shown in FIG. 14, the electronic device 1400 includes: a bus 1402, a processor 1404, a memory 1406, and a communication interface 1408. The processor 1404, the memory 1406, and the communication interface 1408 communicate with each other through the bus 1402. The electronic device 1400 may be, but is not limited to, the vehicle, the on-board terminal in the vehicle, or the mobile phone that is described above. It should be understood that quantities of processors and memories in the electronic device 1400 are not limited in this application.

The bus 1402 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 14, but it does not mean that there is only one bus or only one type of bus. The bus 1404 may include a path for information transmission between components (such as the memory 1406, the processor 1404, and the communication interface 1408) of the electronic device 1400.

The processor 1404 may include any one or more of a central processing unit (central processing unit, CPU), a graphics processing unit (graphics processing unit, GPU), a microprocessor (microprocessor, MP), a digital signal processor (digital signal processor, DSP), or another processor.

The memory 1406 may include a volatile memory (volatile memory), for example, a random access memory (random access memory, RAM). The processor 1404 may further include a non-volatile memory (non-volatile memory), such as a read-only memory (read-only memory, ROM), a flash memory, a hard disk drive (hard disk drive, HDD), or a solid-state drive (solid-state drive, SSD).

The memory 1406 stores executable program code, and the processor 1404 executes the executable program code to separately implement functions of the modules in FIG. 13, to implement all or some steps of the method in the foregoing embodiments. In other words, the memory 1406 stores instructions for performing all or some steps of the method in the foregoing embodiments.

Alternatively, the memory 1406 stores executable code, and the processor 1404 executes the executable code to separately implement functions of the lane line detection apparatus 1300 described above, to implement all or some steps of the method in the foregoing embodiments. In other words, the memory 1406 stores instructions for performing all or some steps of the method in the foregoing embodiments.

The communication interface 1403 uses a transceiver module, for example, but not limited to, a network interface card or a transceiver, to implement communication between the electronic device 1400 and another device or communication network.

Based on the method in the foregoing embodiments, an embodiment of this application provides a computer-readable storage medium. The computer-readable storage medium stores a computer program. When the computer program is run on a processor, the processor is enabled to perform the method in the foregoing embodiments.

Based on the method in the foregoing embodiments, an embodiment of this application provides a computer program product. When the computer program product runs on a processor, the processor is enabled to perform the method in the foregoing embodiments.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC.

All or some of the foregoing embodiments may be implemented by using software, hardware, firmware, or any combination thereof. When implemented by using software, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like.

It may be understood that various numbers in embodiments of this application are merely used for differentiation for ease of description, and are not used to limit the scope of embodiments of this application.

## Claims

1. A lane line detection method, wherein the method comprises:

    acquiring a first image of a road in front of a vehicle;
    processing a feature map of the first image by using a first quantity of convolution kernels, to obtain a first quantity of attention maps, wherein one of the attention maps is used to represent a weight of one instance in the first image at a location of a sample in the feature map of the first image;
    calculating, based on the feature map of the first image and the attention map, a representation vector of the instance corresponding to the attention map;
    calculating, based on the representation vector of the instance corresponding to the attention map, a class and a location of the instance corresponding to the attention map; and
    displaying, when the class of the instance corresponding to the attention map is a lane line, the lane line on the first image based on the location of the lane line.

2. The method according to claim 1, wherein the method further comprises:
displaying, when the class of the instance corresponding to the attention map is a pavement marker, the pavement marker on the first image based on the location of the pavement marker.

3. The method according to claim 1 or 2, wherein a maximum value of a quantity of instances displayed on the first image is the first quantity.

4. The method according to any one of claims 1 to 3, wherein calculating, based on the feature map of the first image and the attention map, the representation vector of the instance corresponding to the attention map specifically comprises:

    obtaining, based on the feature map of the first image and the attention map, a feature map of the instance corresponding to the attention map; and

obtaining, based on the feature map of the instance corresponding to the attention map, the representation vector of the instance corresponding to the attention map.

5. The method according to any one of claims 1 to 4, wherein calculating, based on the representation vector of the instance corresponding to the attention map, the class and the location of the instance corresponding to the attention map specifically comprises:

processing, through a classification network, the representation vector of the instance corresponding to the attention map, to obtain the class of the instance corresponding to the attention map;

calculating the weight of the instance corresponding to the attention map at the location of the sample in the feature map of the first image based on the feature map of the first image and the representation vector of the instance corresponding to the attention map, to obtain a heat map of the instance corresponding to the attention map, wherein the heat map is used to represent the weight of the instance corresponding to the attention map at the location of the sample in the feature map of the first image; and

mapping, to the first image, a location of a sample corresponding to a weight greater than a preset value in the heat map, to obtain the location of the instance corresponding to the attention map.

6. The method according to claim 5, wherein the method further comprises:

calculating an offset of the instance corresponding to the attention map at the location of the sample in the feature map of the first image based on the feature map of the first image and the representation vector of the instance corresponding to the attention map, to obtain an offset map of the instance corresponding to the attention map, wherein the offset map is used to represent a deviation between a real location of the instance corresponding to the attention map on the first image and the location at which the instance corresponding to the attention map is mapped to the first image; and

mapping, to the first image, the location of the sample corresponding to the weight greater than the preset value in the heat map, to obtain the location of the instance corresponding to the attention map specifically comprises:

correcting, based on the offset map of the instance corresponding to the attention map, the location of the sample corresponding to the weight greater than the preset value in the heat map, and mapping a corrected location to the first image, to obtain the location of the instance corresponding to the attention map.

7. The method according to claim 5 or 6, wherein the method is performed by a terminal device, and the method further comprises:

obtaining, based on computing power of the terminal device, a quantity of iterations required for calculating the class and the location of the instance corresponding to the attention map; and

calculating, based on the quantity of iterations, the class and the location of the instance corresponding to the attention map, wherein when the quantity of iterations is greater than or equal to 1, input data of each iteration is the feature map of the first image and a heat map that is of the instance corresponding to the attention map and that is obtained through previous calculation, and output data of each iteration comprises a heat map of the instance corresponding to the attention map.

8. The method according to any one of claims 1 to 7, wherein the attention map, the representation vector, and the class and the location of the instance corresponding to the attention map are all obtained through calculation by using a neural network model; and

the method further comprises:

processing a second image by using the neural network model, to obtain a class and a location of an instance in the second image, wherein the second image is obtained based on transformation of the first image;

obtaining a first loss based on the class and the location of the instance corresponding to the attention map and the class and the location of the instance in the second image; and

updating a parameter in the neural network model with a target of minimizing the first loss.

9. A lane line detection apparatus, comprising:

an acquisition module, configured to acquire a first image of a road in front of a vehicle; and

a processing module, configured to process a feature map of the first image by using a first quantity of convolution kernels, to obtain a first quantity of attention maps, wherein one of the attention maps is used to represent a weight of one instance in the first image at a location of a sample in the feature map of the first image;

the processing module is further configured to calculate, based on the feature map of the first image and the attention map, a representation vector of the instance corresponding to the attention map;

the processing module is further configured to calculate, based on the representation vector of the instance corresponding to the attention map, a class and a location of the instance corresponding to the attention map; and

the processing module is further configured to display, when the class of the instance corresponding to the attention map is a lane line, the lane line on the first image based on the location of the lane line.

10. The apparatus according to claim 9, wherein the processing module is further configured to:
display, when the class of the instance corresponding to the attention map is a pavement marker, the pavement marker on the first image based on the location of the pavement marker.

11. The apparatus according to claim 9 or 10, wherein a maximum value of a quantity of instances displayed on the first image is the first quantity.

12. The apparatus according to any one of claims 9 to 11, wherein when calculating, based on the feature map of the first image and the attention map, the representation vector of the instance corresponding to the attention map, the processing module is specifically configured to:

obtain, based on the feature map of the first image and the attention map, a feature map of the instance corresponding to the attention map; and

obtain, based on the feature map of the instance corresponding to the attention map, the representation vector of the instance corresponding to the attention map.

13. The apparatus according to any one of claims 9 to 12, wherein when calculating, based on the representation vector of the instance corresponding to the attention map, the class and the location of the instance corresponding to the attention map, the processing module is specifically configured to:

process, through a classification network, the representation vector of the instance corresponding to the attention map, to obtain the class of the instance corresponding to the attention map;

calculate the weight of the instance corresponding to the attention map at the location of the sample in the feature map of the first image based on the feature map of the first image and the representation vector of the instance corresponding to the attention map, to obtain a heat map of the instance corresponding to the attention map, wherein the heat map is used to represent the weight of the instance corresponding to the attention map at the location of the sample in the feature map of the first image; and

map, to the first image, a location of a sample corresponding to a weight greater than a preset value in the heat map, to obtain the location of the instance corresponding to the attention map.

14. The apparatus according to claim 13, wherein the processing module is further configured to:

calculate an offset of the instance corresponding to the attention map at the location of the sample in the feature map of the first image based on the feature map of the first image and the representation vector of the instance corresponding to the attention map, to obtain an offset map of the instance corresponding to the attention map, wherein the offset map is used to represent a deviation between a real location of the instance corresponding to the attention map on the first image and the location at which the instance corresponding to the attention map is mapped to the first image; and

when mapping, to the first image, the location of the sample corresponding to the weight greater than the preset value in the heat map, to obtain the location of the instance corresponding to the attention map, the processing module is specifically configured to:
correct, based on the offset map of the instance corresponding to the attention map, the location of the sample corresponding to the weight greater than the preset value in the heat map, and map a corrected location to the first image, to obtain the location of the instance corresponding to the attention map.

15. The apparatus according to claim 13 or 14, wherein the lane line detection apparatus is deployed on a terminal device, and the processing module is further configured to:

obtain, based on computing power of the terminal device, a quantity of iterations required for calculating the class and the location of the instance corresponding to the attention map; and

calculate, based on the quantity of iterations, the class and the location of the instance corresponding to the attention map, wherein when the quantity of iterations is greater than or equal to 1, input data of each iteration is the feature map of the first image and a heat map that is of the instance corresponding to the attention map and that is obtained through previous calculation, and output data of each iteration comprises a heat map of the instance corresponding to the attention map.

16. The apparatus according to any one of claims 9 to 15, wherein the attention map, the representation vector, and the class and the location of the instance corresponding to the attention map are all obtained through calculation by using a neural network model; and
the processing module is further configured to:

   process a second image by using the neural network model, to obtain a class and a location of an instance in the second image, wherein the second image is obtained based on transformation of the first image;
   obtain a first loss based on the class and the location of the instance corresponding to the attention map and the class and the location of the instance in the second image; and
   update a parameter in the neural network model with a target of minimizing the first loss.

17. An electronic device, comprising:

   at least one memory, configured to store a program; and
   at least one processor, configured to execute the program stored in the memory, wherein
   when the program stored in the memory is executed, the processor is configured to perform the method according to any one of claims 1 to 8.

18. A computer-readable storage medium, wherein the computer-readable storage medium stores a computer program, and when the computer program is run on a processor, the processor is enabled to perform the method according to any one of claims 1 to 8.

19. A computer program product, wherein when the computer program product runs on a processor, the processor is enabled to perform the method according to any one of claims 1 to 8.

Lane line detection system 100

Feature map p1

Image acquisition module 110 — Image p0 → Feature extraction module 120 — Feature map p1 → Instance attention map calculation module 130 — Attention maps of N instances → Representation vector extraction module 140

Representation vectors of N instances

Feature map p1 → Representation vector localization module 160

Representation vector classification module 150

Heat maps of N instances

Classes of N instances

Image p0

Instance display module 170

FIG. 1

EP 4 654 157 A1

800×320×3

211

3×3×3×32
Conv+BN+ReLU → 400×160×32 → 3×3×3×32
Conv+BN+ReLU → 200×80×32 → 3×3×32×64
Conv+BN+ReLU

210 212

7×7×3×16
Conv+BN+ReLU → 400×160×16 → 3×3 max pool → 200×80×16 → Stage1 (16c) → 200×80×16 → Stage2 (32c) → 100×40×32 → Stage3 (64c) → 50×20×64 → Stage4 (128c) → 25×10×128 → Global pooling

Global pooling → 1×1×64×64 Conv+BN+Sigmoid → ⊗

Global pooling → 1×1×128×64 Conv+BN+Sigmoid → ⊗

BiLinearUp → 50×20×64

⊕ → BiLinearUp → 100× 40×64

⊕

100×40×64

Concat → 100×40×128 → 3×3×128×128 Conv+BN+ReLU → Stage5 (128c) → TO FIG. 2B

213

FIG. 2A

20

FIG. 2B

EP 4 654 157 A1

FIG. 3

FIG. 4

Lane line detection system 100

FIG. 5

EP 4 654 157 A1

Iterative optimization module 180

Feature map p1

Heat maps of N instances

Representation vector extraction module 140

Representation vector classification module 150

Representation vector localization module 160

Heat maps of N instances

Representation vector extraction module 140

Representation vector classification module 150

Representation vector localization module 160

Heat maps of N instances

Heat maps of N instances

● ● ●

Representation vector extraction module 140

Representation vector classification module 150

Representation vector localization module 160

FIG. 6

Lane line detection system 100

FIG. 7

$cls_i, cls_{j'}$ → Cross entropy → $W_1$

$loc_i, loc_j$ → Weighted Cross entropy → $W_2$

$off_i, off_j$ → L2 distance → $W_3$

⊕ → Hungarian matching

FIG. 8

$cls'_i, cls'_{j'}$ → Cross entropy → $W_1$

$loc'_i, loc'_j$ → Weighted Cross entropy → $W_2$

$off'_i, off'_j$ → L2 distance → $W_3$

⊕ → Total loss

FIG. 9

FIG. 10

EP 4 654 157 A1

Training system 1100

Feature map p4

Image p3 → **Feature extraction module 120** → Feature map p4 → **Instance attention map calculation module 130** → Attention maps of N instances → **Representation vector extraction module 140**

Representation vectors of N instances

Feature map p4 → **Representation vector localization module 160**

**Representation vector classification module 150**

Heat maps of N instances

Feature map p4 → **Iterative optimization module 180**

**Loss calculation module 1101** ← Ground truth

FIG. 11

28

S1201

Acquire a first image of a road in front of a vehicle

S1202

Process a feature map of the first image by using a first quantity of convolution kernels, to obtain a first quantity of attention maps, where one of the attention maps is used to represent a weight of one instance in the first image at a location of a sample in the feature map of the first image

S1203

Calculate, based on the feature map of the first image and the attention map, a representation vector of the instance corresponding to the attention map

S1204

Calculate, based on the representation vector of the instance corresponding to the attention map, a class and a location of the instance corresponding to the attention map

S1205

Display, when the class of the instance corresponding to the attention map is a lane line, the lane line on the first image based on the location of the lane line

FIG. 12

Lane line detection apparatus 1300

| Acquisition module 1301 | Processing module 1302 |

FIG. 13

FIG. 14

## INTERNATIONAL SEARCH REPORT

| International application No. |
| --- |
| **PCT/CN2024/083182** |

### A. CLASSIFICATION OF SUBJECT MATTER

G06V 20/56(2022.01)i

According to International Patent Classification (IPC) or to both national classification and IPC

### B. FIELDS SEARCHED

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 车道, 道路, 检测, 图像, 卷积, 特征, 注意力, 位置, 坐标, 权重, 权值, 实例, 向量, lane, road, detect, image, convolution, characteristic, feature, attention, position, coordinate, weight, instance, vector

### C. DOCUMENTS CONSIDERED TO BE RELEVANT

| Category* | Citation of document, with indication, where appropriate, of the relevant passages | Relevant to claim No. |
| --- | --- | --- |
| A | CN 112307850 A (ZHEJIANG SENSETIME TECHNOLOGY DEVELOPMENT CO., LTD.) 02 February 2021 (2021-02-02) description, paragraphs [0005]-[0066] | 1-19 |
| A | CN 112633177 A (ZHEJIANG UNIVERSITY) 09 April 2021 (2021-04-09) entire document | 1-19 |
| A | CN 113158768 A (SUN YAT-SEN UNIVERSITY) 23 July 2021 (2021-07-23) entire document | 1-19 |
| A | CN 113361447 A (UNIVERSITY OF SCIENCE AND TECHNOLOGY OF CHINA) 07 September 2021 (2021-09-07) entire document | 1-19 |
| A | CN 115205681 A (NANJING UNIVERSITY OF INFORMATION SCIENCE & TECHNOLOGY) 18 October 2022 (2022-10-18) entire document | 1-19 |

☑ Further documents are listed in the continuation of Box C. ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **17 June 2024** | **21 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 654 157 A1**

**INTERNATIONAL SEARCH REPORT**

International application No.

**PCT/CN2024/083182**

**C.   DOCUMENTS CONSIDERED TO BE RELEVANT**

| Category* | Citation of document, with indication, where appropriate, of the relevant passages | Relevant to claim No. |
|---|---|---|
| A | CN 115273013 A (JIANGXI LITTLE HORSE ROBOT CO., LTD.) 01 November 2022 (2022-11-01)<br>    entire document | 1-19 |
| A | US 2017001648 A1 (NATIONAL UNIVERSITY OF DEFENSE TECHNOLOGY) 05 January 2017 (2017-01-05)<br>    entire document | 1-19 |

Form PCT/ISA/210 (second sheet) (July 2022)

## INTERNATIONAL SEARCH REPORT
### Information on patent family members

International application No.

**PCT/CN2024/083182**

| Patent document cited in search report | | | Publication date (day/month/year) | Patent family member(s) | | | Publication date (day/month/year) |
|---|---|---|---|---|---|---|---|
| CN | 112307850 | A | 02 February 2021 | None | | | |
| CN | 112633177 | A | 09 April 2021 | None | | | |
| CN | 113158768 | A | 23 July 2021 | None | | | |
| CN | 113361447 | A | 07 September 2021 | None | | | |
| CN | 115205681 | A | 18 October 2022 | None | | | |
| CN | 115273013 | A | 01 November 2022 | None | | | |
| US | 2017001648 | A1 | 05 January 2017 | KR | 20160110388 | A | 21 September 2016 |
| | | | | KR | 101867041 | B1 | 14 June 2018 |
| | | | | WO | 2015106690 | A1 | 23 July 2015 |
| | | | | EP | 3109114 | A1 | 28 December 2016 |
| | | | | EP | 3109114 | A4 | 01 February 2017 |
| | | | | EP | 3109114 | B1 | 14 March 2018 |
| | | | | US | 9963153 | B2 | 08 May 2018 |
| | | | | JP | 2017505733 | A | 23 February 2017 |
| | | | | JP | 6307629 | B2 | 04 April 2018 |
| | | | | CN | 103770733 | A | 07 May 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310328836